# EUROPÄISCHE PATENTSCHRIFT

(11) **EP 3 277 967 B1**
(45) Veröffentlichungstag und Bekanntmachung des Hinweises auf die Patenterteilung: **07.04.2021**
(21) Anmeldenummer: 16706973.1
(22) Anmeldetag: 19.02.2016
(51) Int. Cl.: F16B 21/08, F16B 21/16, F16B 21/18, F16L 21/035

(54) **STECKBARE VERBINDUNGSANORDNUNG UND VERFAHREN ZUR VORBEREITUNG EINER STECKBAREN VERBINDUNGSANORDNUNG**
PLUG-IN CONNECTION ARRANGEMENT AND METHOD FOR PREPARING A PLUG-IN CONNECTION ARRANGEMENT
DISPOSITIF DE CONNEXION ENFICHABLE ET PROCÉDÉ DE FABRICATION D'UN DISPOSITIF DE CONNEXION ENFICHABLE

(30) Priorität: 30.03.2015 DE 102015003993; 10.06.2015 DE 102015007356
(43) Veröffentlichungstag der Anmeldung: 07.02.2018
(73) Patentinhaber: WABCO GmbH, 30453 Hannover (DE)
(72) Erfinder: BREDBECK, Klaus, 31628 Landesbergen (DE); FRANK, Dieter, 30171 Hannover (DE); GEHRKE, Morten, 30974 Wennigsen (DE); VOGELSANG, Frank, 31582 Nienburg (DE); WEBER, Thorsten, 31515 Wunstorf (DE)
(74) Vertreter: Rabe, Dirk-Heinrich
(86) Internationale Anmeldenummer: PCT/EP2016/000295
(87) Internationale Veröffentlichungsnummer: WO 2016/155861

(56) Entgegenhaltungen:
- AT-U1- 7 195
- AT-U1- 7 195
- DE-T2- 69 403 174
- FR-A- 1 473 169
- FR-A- 1 473 169
- JP-A- 2012 077 793
- US-A- 3 149 845
- US-A- 3 149 845

## Beschreibung

Die Erfindung betrifft eine steckbare Verbindungsanordnung für ein Bauteil. Die Erfindung betrifft weiter ein Gehäuse, insbesondere ein Motorgehäuse, und ein Verfahren zur, insbesondere werkseitigen, Vorbereitung einer steckbaren Verbindungsanordnung.

Es besteht zum Teil das Erfordernis, eine steckbare Verbindungsanordnung werkseitig zunächst verschließen zu müssen, da zum einen für eine spätere Nutzung benötigte Teile erst bei einer späteren Montage angeschlossen werden und zum anderen gleichwohl ein Teil der Verbindungsanordnung geschützt werden soll. Solch eine werkseitige Verschließung von steckbaren Verbindungsanordnungen kann durch ein zusätzliches Transportsicherungselement erfolgen, was allerdings zu erhöhten Produktionskosten führen kann.

Eine bekannte Maßnahme zur Befestigung zweier Teile einer Verbindungsanordnung besteht in der Verwendung eines Drahtsprengrings. Bei dieser Maßnahme wird ein geschlitzter Ring aus Federstahl in eine Nut im einzusetzenden Teil eingesetzt. Der Drahtsprengring muss regelmäßig einen etwas größeren Ringdurchmesser als die Nut im einzusetzenden Teil haben; er kann insbesondere deswegen keine Dichtfunktion ausführen. Beim Fügen beider Teile über eine Einführschräge federt der Ring ein und trifft in der Endposition auf eine Gegennut in einer Bohrung, wo er wieder ausfedert und damit die Befestigung herstellt. Diese an sich geeignete Lösung ist jedoch noch zu verbessern, insbesondere weil der Drahtsprengring für gewisse Anwendungen wieder zu entnehmen oder auszutauschen ist, wenn ein mit der Verbindungsanordnung realisiertes Bauteil betrieben werden soll.

Das Dokument FR 1 473 169 offenbart eine Steckverbindung mit mindestens zwei Dichtungsringen, wobei nach der Montage der erste Dichtungsring die Steckverbindung abdichtet und der zweite Dichtungsring die Steckverbindung bestehend aus einem Aufnahmeelement und einem Steckelement wie ein Sprengring zusammenhält.

Das Dokument AT 007 195 U1 beschreibt eine Befestigungsanordnung mit einem konischen Ankerstück und einer konischen Ausnehmung, wobei die konischen Mantelflächen einerseits Ringnuten und andererseits Ringnuten mit mehreren O-Ringen oder Ringwulsten aufweisen. Die Ringnuten sind zu den gegenüberliegenden Ringnuten etwas in der Höhe versetzt, so dass bei einem Anschlag der miteinander zu verbindenden Teile eine Anzugskraft als Vorspannung wirksam ist.

Das Dokument US 3,149,845 offenbart eine Dichtvorrichtung mit einer speziellen Dichtstruktur, welche für den Einsatz von speziellen O-Ringen in einem sehr weiten Temperaturbereich geeignet ist.

Das Dokument JP2012077793A offenbart eine Verbindungsstruktur mit einem ersten Element mit dem ersten Passungsteil und einem zweiten Element mit einem zweiten Passungsteil, welche in einem Dichtungszustand durch einen O-Ring, der in einem elastischen Kompressionszustand in radialer Richtung eingesetzt ist, eine Verbindung herstellt.

Aufgabe der vorliegenden Erfindung ist es, eine verbesserte, steckbare Verbindungsanordnung und ein verbessertes Verfahren zur, insbesondere werkseitigen, Vorbereitung der steckbaren Verbindungsanordnung anzugeben, insbesondere bekannte Lösungen für steckbare Verbindungsanordnungen zu verbessern. Vorzugsweise soll eine verbesserte, steckbare Verbindungsanordnung und ein verbessertes Verfahren zur, insbesondere werkseitigen, Vorbereitung der steckbaren Verbindungsanordnung angegeben werden, die sich für den Betrieb eines Bauteils eignet, das abgedichtet sein soll, insbesondere im Betrieb ein abgedichtete Verbindungsanordnung benötigt.

Die Aufgabe wird hinsichtlich der steckbaren Verbindungsanordnung erfindungsgemäß mit einer steckbaren Verbindungsanordnung des Anspruchs 1 gelöst.

Erfindungsgemäß wird hierzu, in einem allgemeinen Aspekt der Erfindung, eine steckbare Verbindungsanordnung für ein Bauteil, aufweisend ein erstes Teil und ein zweites Teil, mit einer ersten Nutkontur in einer in dem ersten Teil angeordneten ersten Ringnut und mit einer zweiten Nutkontur in einer in dem zweiten Teil angeordneten zweiten Ringnut, vorgeschlagen, welche,
- über ein zwischen dem ersten Teil und dem zweiten Teil angeordnetes elastisches Verbindungsanordnungselement in der zweiten Ringnut,
- in einer ersten Position eine Halteposition zueinander besitzen können, und
- die entlang einer axialen Richtung in eine, insbesondere für einen Betrieb vorgesehene, zweite Position überführbar sind, wobei die zweite Position eine dichtende Rastposition ist.

In der Halteposition werden das erste und zweite Teil insbesondere selbsttätig in Position zueinander gehalten. Vorzugsweise ist bereits in der Halteposition das erste und das zweite Teil, jedenfalls ansatzweise, an dem elastischen Verbindungsanordnungselement zueinander verrastet. Auch eine Dichtfunktion kann jedenfalls ansatzweise bereits gegeben sein.

Die dichtende Rastposition ist dichtend in dem Sinne, dass ein Eindringen von Luft und/oder Wasser oder von sonstigen Fluiden zwischen dem ersten Teil und dem zweiten Teil aufgrund des elastischen Verbindungsanordnungselements verlässlich unterbunden wird.

Die Erfindung führt auch in einer Weiterbildung auf ein Bauteil des Anspruchs 12 mit einem Gehäuse; insbesondere einem Motorgehäuse und einem Kurbelgehäuse eines Kompressors, aufweisend eine steckbare Verbindungsanordnung nach einem der Ansprüche 1 bis 11, bei welcher
- der erste Teil als ein Motordeckel und/oder eine Welle, insbesondere ein als Welle wirkender Motordeckel, und
- das zweite Teil als ein Motorgehäuse, insbesondere eine Bohrung im Motorgehäuse, ausgebildet sind.

Eine bevorzugte Weiterbildung des allgemeinen Aspekts der Erfindung umfasst ein Motorgehäuse zum Anschluss an ein Kurbelgehäuse eines Kompressors. Das Motorgehäuse weist bevorzugt eine steckbare Verbindungsanordnung gemäß dem allgemeinen Aspekt der Erfindung auf, wobei der erste Teil ein Motordeckel und das zweite Teil eine Bohrung in dem Motorgehäuse ist.

Insbesondere wird bei der Weiterbildung des allgemeinen Aspekts der Erfindung bevorzugt der Motordeckel werkseitig als Transportsicherung in der Bohrung genutzt, da das Motorgehäuse vorteilhaft ohne angeschraubtes Kurbelgehäuse geliefert werden kann. Der Motordeckel bleibt bei dieser besonderen Weiterbildung somit in der Halteposition während eines Montagevorganges und wird manuell nach dem Anschluss des Kurbelgehäuses des Kompressors an das Motorgehäuse in die dichtende Rastposition überführt.

Die Aufgabe wird hinsichtlich des Verfahrens zur, insbesondere werkseitigen, Vorbereitung der steckbaren Verbindungsanordnung erfindungsgemäß mit einem Verfahren des Anspruchs 13 gelöst.

Hinsichtlich des erfindungsgemäßen Verfahrens zur, insbesondere werkseitigen, Vorbereitung der steckbaren Verbindungsanordnung weist dieses die folgenden Schritte auf:
- formschlüssiges Aufsetzen einer mit der ersten Ringnut ausgebildeten Aufnahme des ersten Teils auf den Ansatz des zweiten Teils in die erste Position einer Halteposition, oder formschlüssiges Ansetzen eines mit der zweiten Ringnut ausgebildeten Ansatzes des zweiten Teils in die Aufnahme des ersten Teils in die erste Position einer Halteposition,
- axiales Bewegen des ersten Teils und des zweiten Teils zueinander entlang einer axialen Richtung zum Überführen des Bauteils in die zweite Position einer dichtenden Rastposition,
- und optional bevor das Bauteil in der ersten Position ist:
- Anordnen eines Dicht- und Halteelements, insbesondere in Form eines O-Ringes, in nur der zweiten Ringnut einer Gesamtnut in einer dritten Position einer vorläufigen Halteposition.

Bevorzugt ist das erste Teil ein Teil eines Deckels, welcher in der durch die zweite Position vorliegenden dichtenden Rastposition das zweite Teil luftdicht verschließt. Insbesondere kann das Bauteil in der durch die zweite Position vorliegenden dichtenden Rastposition zum Transport eines Gases genutzt werden.

In der Rastposition ist somit insbesondere ein Austreten von Luft und/oder Wasser oder sonstigen Fluiden durch den Zwischenraum zwischen dem ersten Teil und dem zweiten Teil in die Umgebung aufgrund des elastischen Verbindungsanordnungselements unterbunden; auch ein Eintreten von Luft und/oder Wasser oder sonstigen Fluiden durch den Zwischenraum zwischen dem ersten Teil und dem zweiten Teil in einen Innenraum in dem ersten und/oder zweiten Teil ist aufgrund des elastischen Verbindungsanordnungselements unterbunden.

Bevorzugte Weiterbildungen sind Gegenstand der Unteransprüche und geben im Einzelnen vorteilhafte Möglichkeiten an, wie die/das oben erläuterte steckbare Verbindungsanordnung/Verfahren im Rahmen der Aufgabenstellung sowie hinsichtlich weiterer Vorteile zu realisieren bzw. auszugestalten sind.

Das erste Teil ist bevorzugt als eine Aufnahme für den Ansatz gebildet; insofern ist das zweite Teil bevorzugt als ein Ansatz gebildet, der in die Aufnahme gesteckt werden kann oder auf den die Aufnahme gesteckt werden kann. Bevorzugt weist das erste Teil dazu einen äußeren insbesondere ringförmigen Rahmen oder dergleichen äußeren Rand der Aufnahme auf, in den eine am zweiten Teil befindliche innere, insbesondere ringförmige Halterung oder dergleichen innerer Rand des Ansatzes eingesetzt werden kann.

Es ist auch der umgekehrte Fall möglich, bei dem das zweite Teil bevorzugt als eine Aufnahme für den Ansatz gebildet ist; insofern ist dann das erste Teil bevorzugt als ein Ansatz gebildet, der in die Aufnahme gesteckt werden kann oder auf den die Aufnahme gesteckt werden kann. Bevorzugt weist dann das zweite Teil dazu einen äußeren insbesondere ringförmigen Rahmen oder dergleichen äußeren Rand der Aufnahme auf, in den eine am ersten Teil befindliche innere, insbesondere ringförmige Halterung oder dergleichen innerer Rand des Ansatzes eingesetzt werden kann.

Bevorzugt ist das Verbindungsanordnungselement in Form eines Dicht- und Haltelements gebildet, kann also das Bauteil unter Halten des ersten und zweiten Teils aneinander abdichten; insbesondere. zwischen dem ersten und zweiten Teil abdichten.

Bevorzugt ist das erste Teil und das zweite Teil jeweils zylindrisch ausgebildet und/oder weist einen zylindrischen Rand auf. Dadurch kann in besonders einfacher Weise eine Formschlüssigkeit zwischen den beiden Teilen in der dichtenden Rastposition sichergestellt werden. Insbesondere für den Fall, dass das elastische Verbindungsanordnungselement als O-Ring ausgebildet ist, sind der erste Teil und das zweite Teil bevorzugt zylindrisch ausgebildet. Weiterhin vorteilhaft ist, dass die Verwendung solch eines standardmäßig, industriell gefertigten O-Rings für geringe Produktionskosten der erfindungsgemäßen steckbaren Verbindungsanordnung sorgt, da keine aufwendige Produktion solcher Montageteile notwendig ist. Außerdem ist die Anbringung eines O-Rings ein Prozessschritt mit geringem Aufwand.

In einer bevorzugten Weiterbildung des allgemeinen Aspekts der steckbaren Verbindungsanordnung ist das elastische Verbindungsanordnungselement in Form eines Dicht- und Haltelements als ein O-Ring gebildet. Die Verwendung eines standardmäßig, industriell gefertigten Teils wie eines O-Rings sorgt für geringe Produktionskosten der steckbaren Verbindungsanordnung, da keine aufwendige Produktion solcher Montageteile notwendig ist; so ist die Anbringung eines beispielsweise aus Gummi gefertigten O-Ringes ein Prozessschritt mit geringem Aufwand. Die Verwendung eines O-Ringes als Dicht- und Haltelement erweist sich als besonders vorteilhaft gegenüber einer ausschließlichen Verwendung als Dichtelement und eröffnet die Möglichkeit, konzeptionell das erste und das zweite Teil für den Transport aneinander zu halten.

In einer Weiterbildung ragt ein Volumen des in der ersten Position verformten elastischen Verbindungsanordnungselements deutlicher über ein Nutvolumen einer durch die zweite Ringnut gebildeten und von der zweiten Nutkontur begrenzten Vertiefung hinaus als und ein Volumen des in der zweiten Position verformten elastischen Verbindungsanordnungselements. Insbesondere ist ein Querschnitt des elastischen Verbindungsanordnungselements in der zweiten Position eher ellipsenförmig ist als in der ersten Position.. Vorteilhaft an dieser Weiterbildung ist, dass auch im Falle einer Formschlüssigkeit zwischen den beiden Teilen der steckbaren Verbindungsanordnung eine Überführung von der ersten Position in die zweite Position, also von der Halteposition in die dichtende Rastposition unter Verformung des elastischen Verbindungsanordnungselements möglich ist; vorteilhaft von einer eher unförmigen deutlich von einer Ellipsenform abweichenden Form --insbesondere durch Einwirkung des genannten Grats an der Rastnase-- in der ersten Position zu einer näher an der Ellipsenform befindlichen Form --insbesondere durch Einwirkung der ersten und zweiten Nutkontur auf beiden Seiten des elastischen Verbindungsanordnungselements.

Bevorzugt ist das Verbindungsanordnungselement in Form eines Dicht- und Haltelements gebildet, es kann also das Bauteil unter Halten des ersten und zweiten Teils aneinander abdichten; insbesondere zwischen dem ersten und zweiten Teil abdichten. Die erste Position, als Halteposition, ist bevorzugt für einen Transport des Bauteils vorgesehen; z.B. vom Hersteller zum Verbraucher. In dieser Halteposition kann, muss aber nicht, das Bauteil bereits abgedichtet sein. Jedenfalls die zweite Position, als dichtende Rastposition, ist bevorzugt für einen Betrieb des Bauteils vorgesehen; z.B. zum Durchströmen und/oder Beaufschlagen des ersten und zweiten Teils des Bauteils mit Druckluft oder zum Abdichten zur Umwelt. Optional kann aber, bevor das Bauteil in der ersten Position ist, vorgesehen sein: Anordnen eines Dicht- und Halteelements, insbesondere in Form eines O-Ringes, in nur der zweiten Ringnut einer Gesamtnut in einer dritten Position einer vorläufigen Halteposition. Insbesondere wird ein O-Ring dazu durch einen zwischen dem ersten und zweiten Teil bestehenden Montagespalt in nur der zweiten Ringnut einer Gesamtnut eingeschnappt.

Erfindungsgemäß weisen das erste Teil und das zweite Teil jeweils eine Einführschräge auf, über welche unter Verformung des elastischen Verbindungsanordnungselements das erste Teil und das zweite Teil in die Halteposition überführbar sind. Dadurch wird die Montage der steckbaren Verbindungsanordnung vereinfacht. Außerdem wird das manuelle Überführen der Halteposition in die dichtende Rastposition, durch das Verschieben des ersten Teils relativ zum zweiten Teil, erleichtert.

Durch Überführen des Bauteils, optional von der vorläufigen Halteposition in die Halteposition und dann, von der Halteposition in die Rastposition, kann in vorteilhafter Weise eine Verbindungsanordnung von dem ersten Teil und dem zweiten Teil zunächst im Rahmen der Halteposition gesichert werden. Diese kann dann durch entsprechendes manuelles Vorgeben auch eine Verdichtung dieser Verbindungsanordnung für den Betrieb des Bauteils gestatten, ohne dass dafür andere Bauteile oder ein aufwendiger Montageschritt nötig sind. Dadurch dass andere Bauteile nicht erforderlich sind, führt die vorgeschlagene steckbare Verbindungsanordnung auch zu einem vergleichsweise geringen Raumbedarf und zu einem geringen Lieferaufwand bereits in der Halteposition.

Das Überführen des ersten und zweiten Teils des Bauteils von der Halteposition der ersten Position in die dichtende Rastposition der zweiten Position kann bevorzugt manuell oder automatisiert oder teilautomatisiert erfolgen. In der ersten Position als insbesondere für den Transport vorgesehene Halteposition kann die steckbare Verbindungsanordnung luftdicht ausgebildet sein.

Die, insbesondere automatisierte und/oder manuelle, Überführung von der Halteposition in die dichtende Rastposition ohne aufwendige zusätzliche Montageschritte, wie beispielsweise das zusätzliche Anbringen eines Dichtelementes, bringt auch den Vorteil einer einfachen Montierbarkeit. Dies kann zu einer Zeitersparnis bei der Montage und einer Verringerung der Verletzungsgefahr führen. Durch das elastische Verbindungsanordnungselement kann für das Halten des ersten Teils in dem zweiten Teil im Rahmen der Halteposition eine ähnliche Haltefestigkeit gewährleistet werden, wie sie bisher durch den eingangs erläuterten Drahtsprengring erreicht wird.

Das elastische Verbindungsanordnungselement sorgt außerdem dafür, dass der erste und das zweite Teil in der Halteposition und auch nach einer Überführung in die dichtende Rastposition demontierbar ist. Dies kann eine Zerstörung des elastischen Verbindungsanordnungselements bewirken; jedoch kann dieses leicht ersetzt werden. Außerdem kann optional, bevor das Bauteil in der ersten Position ist, vorgesehen sein: Anordnen eines Dicht- und Halteelements, insbesondere in Form eines O-Ringes, in nur der zweiten Ringnut einer Gesamtnut in einer dritten Position einer vorläufigen Halteposition. Dann kann das Dicht- und Halteelements jederzeit auch zerstörungsfrei wieder aus der zweiten Ringnut entnommen werden. Bevorzugt kann in der dritten Position, insbesondere einer vor einer werkseitigen Montage vorgesehenen dritten Position, das erste und das zweite Teil eine vorläufige Halteposition zueinander aufweisen, bei welcher das erste Teil durch eine elastische Verformung des elastischen Verbindungsanordnungselements zwischen der ersten Einführschräge und dem abgeschrägten zweiten Nutgrund eine Haltekraft erfährt, insbesondere die Verformung frei ist von einer Einwirkung eines hakenartigen Grates.

Die zweite Ringnut ermöglicht eine sichere Einbringung des Verbindungsanordnungselements in das zweiten Teil der steckbaren Verbindungsanordnung; nämlich insbesondere gemäß der dritten Position . Aus einer Kombination der zweiten Ringnut mit der ersten Ringnut an dem ersten Teil der steckbaren Verbindungsanordnung ergeben sich die erste und die zweite Position abhängig von einer Lage der Ringnuten mit den jeweiligen Nutkonturen zueinander; die Gesamtnut kann, muss aber nicht durch die erste und die zweite Ringnut in stetigem Übergang der Seiten der Nutkonturen gebildet sein.

Die Lage von erster Ringnut, elastischem Verbindungsanordnungselement und zweiter Ringnut zueinander ist somit charakteristisch für das Vorliegen der Halteposition und der dichtenden Rastposition.

Insbesondere für den Transport vorgesehen ist die Halteposition dahingehend, dass schon eine, insbesondere werkseitige Montage der steckbaren Verbindungsanordnung stattgefunden hat und eine Position des ersten und zweiten Teils zueinander durch die steckbare Verbindungsanordnung für den Transport gesichert ist.

In der Halteposition der ersten Position wird durch elastische Verformung des elastischen Verbindungsanordnungselementes ein Pressdruck des elastischen Verbindungsanordnungselementes und damit ein Haltedruck und daraus resultierend eine Haltekraft und/oder eine Lagekraft bevorzugt gegen den ersten Teil erzeugt, welche für eine in der Halteposition vorliegende Haltefestigkeit sorgt. Unter der in der Halteposition vorliegenden Haltefestigkeit ist dabei jedenfalls eine Axialfixierung des ersten Teils zu verstehen, also ein Fixieren des ersten Teils auf einer Achse in axialer Richtung, wobei die Haltekraft Fr in radialer Richtung R und die Lagekraft Fa in axialer Richtung A wirkt.

Ein Vorteil des erfindungsgemäßen Verfahrens ist ein durch die, bevorzugt werkseitig, angeordnete Halteposition realisierter, sicherer Transport eines Bauteils, welches die steckbare Verbindungsanordnung umfasst; z.B. im Rahmen eines Transports zu einem Verbraucher oder Betriebsstandort des Bauteils. Außerdem kann der Verbraucher nun selbst die steckbare Verbindungsanordnung manuell in die dichtende Rastposition überführen, so dass aufwendige Montageschritte vermieden werden.

In einer Weiterbildung kann durch manuelles Verschieben des ersten Teils relativ zum zweiten Teil, also durch das Verschieben der ersten Ringnut relativ zur zweiten Ringnut in axialer Richtung, die steckbare Verbindungsanordnung von der Halteposition in die dichtende Rastposition überführt werden. Hierbei muss das elastische Verbindungsanordnungselement durch die erste Nutkontur und die zweite Nutkontur über ausreichend Freiraum verfügen, um das manuelle Verschieben des ersten Teils relativ zum zweiten Teil zu erlauben, aber dennoch eine Pressung seiner elastischen Struktur zu erfahren. Insbesondere ist vorgesehen, dass eine Nutkontur der ersten Ringnut und/oder eine Nutkontur der zweiten Ringnut ausgebildet ist:
eine Haltekraft und/oder Rastfunktion in Zusammenwirken mit dem elastischen Verbindungsanordnungselement in Form eines Dicht- und Haltelements, auszuüben und/oder
eine, insbesondere beschädigungsfreie, Montage zu ermöglichen.

Erfindungsgemäß weist der erste Teil eine Nase auf, wobei die erste Ringnut so ausgebildet ist, dass sie durch einen hakenartigen Grat von der Nase getrennt ist, und wobei außerdem die zweite Nutkontur einen abgeschrägten zweiten Nutgrund aufweist.

Erfindungsgemäß weist das erste Teil an einem ersten Rand eine Nase mit einer Einführschräge und einen hakenartigen Grat auf, wobei die erste Ringnut so ausgebildet ist, dass sie durch den hakenartigen Grat von der Nase getrennt ist.

Erfindungsgemäß weist
- das erste Teil an der ersten Ringnut die erste Nutkontur mit einem abgeschrägten ersten Nutgrund auf, und
- das zweite Teil an der zweiten Ringnut die zweite Nutkontur mit einem abgeschrägten zweiten Nutgrund auf.

Die steckbare Verbindungsanordnung erfährt in der ersten Position des ersten Teils durch eine elastische Verformung des elastischen Verbindungsanordnungselements zwischen dem hakenartigen Grat und dem abgeschrägten Nutgrund einen Haltedruck, und damit vor allem eine Haltekraft in radialer Richtung.

Bevorzugt besitzt das elastische Verbindungsanordnungselement einen durch die elastische Verformung in der ersten Position entstandenen Querschnittsbereich in einer zur axialen Richtung quer liegenden radialen Richtung, dessen kleinere Ausdehnung von der Einführschräge der Nase begrenzt ist und dessen größere Ausdehnung hinter den hakenartigen Grat in die erste Ringnut hineinragt.

In dieser Weiterbildung kann der erste Teil, ggf. nur unter Zerstörung des elastischen Verbindungsanordnungselements, von dem zweiten Teil getrennt werden, da der hakenartige Grat an der größten Ausdehnung des durch die elastische Verformung entstandenen Querschnittsbereichs des elastische Verbindungsanordnungselements vorbeigeführt werden muss. Entsprechend ist in dieser Variante eine Trennung des ersten und zweiten Teils voneinander nur unter einer vergleichsweise großen Kraftaufwendung möglich.

In einer bevorzugten Weiterbildung ist die Nase in dem ersten Teil bei vorliegender Halteposition nicht in axialer Richtung in Kontakt mit einem Objekt. Dies ermöglicht eine Überführung der steckbaren Verbindungsanordnung in die, insbesondere für den Betrieb des Bauteils vorgesehene, zweite Position durch Verschiebung des ersten Teils relativ zum zweiten Teil in axialer Richtung.

Bevorzugt ist vorgesehen, dass
- das erste Teil die Nase und einen abgeschrägten zur Nase hin abschüssig verlaufenden ersten Nutgrund aufweist, und/oder
- das zweite Teil eine Anlage aufweist, welche eine axiale Bewegung des ersten Teils zum zweiten Teil der steckbaren Verbindungsanordnung in axialer Richtung beschränkt.

In einer Weiterbildung weist der erste Teil somit die Nase und einen zur Nase hin abgeschrägten ersten Nutgrund auf. Weiterhin weißt das zweite Teil eine Anlage, welche eine axiale Bewegung des ersten Teils zum zweiten Teil der steckbaren Verbindungsanordnung in axialer Richtung beschränkt, und die zweite Nutkontur den abgeschrägten zweiten Nutgrund auf.

In einer Weiterbildung ist vorgesehen, dass in der zweiten Position das erste Teil durch eine elastische Verformung des elastischen Verbindungsanordnungselements zwischen dem abgeschrägten ersten und dem abgeschrägten zweiten Nutgrund wiederum einen Haltedruck und vor allem eine Haltekraft in radialer Richtung und/oder einen Lagedruck und damit vor allem eine Lagekraft in axialer Richtung erfährt. Insbesondere ist dazu vorgesehen, dass sich ein Ringnutquerschnitt einer aus der ersten und zweiten Ringnut gebildeten Gesamtnut ausgehend von der Nase verjüngt, wobei die Nutgründe ausgehend von der Nase aufeinander zulaufen und die Nase und die Anlage in Kontakt zueinander stehen.

Vorzugsweise weist weiter die Nase eine axiale Länge derart auf, dass in der zweiten Position das erste Teil durch eine elastische Verformung des elastischen Verbindungsanordnungselements zwischen dem abgeschrägten ersten und dem abgeschrägten zweiten Nutgrund und dem hakenartigen Grad einen Haltedruck und damit eine Haltekraft in radialer Richtung und einen Lagedruck und damit eine Lagekraft in axialer Richtung erfährt, wobei die Lagekraft die Nase und die Anlage gegeneinander drückt.

In einer weiteren vorteilhaften Weiterbildung ist der erste Teil durch den bereits in einer früheren Weiterbildung erläuterten hakenartigen Grat nicht nur in axialer Richtung, sondern in sämtlichen Richtungen relativ zum zweiten Teil fixiert. Da die Nase und die Anlage in Kontakt zueinander stehen, und somit kein weiteres Einschieben des ersten Teils in den zweiten Teil möglich ist, sorgt der hakenartige Grat durch ein Verhindern des Trennens der beiden Teile dafür, dass das erste Teil relativ zum zweiten Teil fixiert ist. Jedenfalls in axialer Richtung ergibt sich so ein Formschluss; in einer Drehrichtung um die axiale Richtung ist das erste Teil relativ zum zweiten Teil kraftschlüssig gegen Drehen festgelegt.

In einer weiteren Weiterbildung ist vorgesehen, dass die Nase eine axiale Länge derart aufweist, dass in der zweiten Position das erste Teil durch eine elastische Verformung des elastischen Verbindungsanordnungselements zwischen dem abgeschrägten ersten und dem abgeschrägten zweiten Nutgrund und dem hakenartigen Grad einen Haltedruck und damit vor allem eine Haltekraft in radialer Richtung und einen Lagedruck und damit eine Lagekraft in axialer Richtung erfährt, wobei die Lagekraft die Nase und die Anlage gegeneinander drückt. Der insbesondere permanente Lagedruck ist vorteilhaft für Verbindungsanordnungen die unter einem vergleichsweise hohen Druck stehen, so dass große Kräfte in eine Richtung wirken, die ohne das elastische Verbindungsanordnungselement zu einer Trennung von dem ersten und zweiten Teil voneinander führen würden und somit zu einer Trennung der steckbaren Verbindungsanordnung. Zusätzlich kann eine so erzeugte Vorspannkraft vielmehr durch den genannten vergleichsweise hohen Druck erhöht werden. Anschaulich ausgedrückt kann das elastische Verbindungsanordnungselement, einer durch den vergleichsweise hohen Druck erzeugten Kraft kriechend ausweichen und im Resultat, der durch den vergleichsweise hohen Druck erzeugten Kraft folgend, in eine der Kraft gegenüberliegende Ringnut gedrückt werden und sich dabei verkrallen. In einer Weiterbildung ist die Nase des ersten Teils mit einer Einführschräge ausgebildet, und die zweite Nutkontur weist den bereits in einer vorherigen Weiterbildung erläuterten abgeschrägten zweiten Nutgrund auf. Vorzugsweise ist in einer dritten Position, insbesondere einer vor einer werkseitigen Montage vorgesehenen dritten Position, dass das erste und das zweite Teil eine vorläufige Halteposition zueinander aufweisen, bei welcher das erste Teil durch eine elastische Verformung des elastischen Verbindungsanordnungselements zwischen der ersten Einführschräge und dem abgeschrägten zweiten Nutgrund ein Haltdruck und damit vor allem eine Haltekraft in radialer Richtung erfährt, insbesondere die Verformung frei ist von einer Einwirkung des hakenartigen Grates. Somit kann schon in einem vormontierten Zustand des Bauteils eine werkseitige Montage vorbereitet werden.

Eine Vereinfachung der Montage der steckbaren Verbindungsanordnung birgt ebenfalls eine weitere Weiterbildung, in der die erste und die zweite Ringnut aus einem elastischen Material ausgebildet sind. Dadurch wird eine größere Kontaktfläche zwischen dem elastischen Verbindungsanordnungselement und dem ersten Teil und zwischen dem elastischen Verbindungsanordnungselement und dem zweiten Teil erreicht, als sie im Falle starrer Ringnuten vorliegen. Dies kann bei einem Vorliegen der dichtenden Rastposition eine sichere Bereitstellung der Dichtefunktion des elastischen Verbindungsanordnungselementes unterstützen und die Überführung der ersten Position in die zweite Position vereinfachen. In einer davon verschiedenen und präferierten Weiterbildung sind die erste und die zweite Ringnut aus einem starren Material gebildet. Dies sorgt für eine größere Festigkeit und Robustheit der steckbaren Verbindungsanordnung in der, insbesondere für einen Betrieb des Bauteils vorgesehenen zweiten Position.

In einer Weiterbildung ist das erste Teil ein Teil eines Deckels, welcher in der dichtenden Rastposition das zweite Teil als ein Teil einer entsprechenden Aufnahme luftdicht verschließt. In einer Variante dieser Weiterbildung wird der Deckel werkseitig in der Halteposition zu der Aufnahme angeordnet, um die Aufnahme während eines Transports des die Aufnahme umfassenden Bauteils zu schützen. Wird bei der Montage kein weiteres Bauteil an die Aufnahme angeschlossen, kann der Deckel in dieser Variante der Weiterbildung durch zusätzliches manuelles und/oder automatisiertes Drücken des Deckels und dadurch realisiertes Verschieben des Deckels relativ zur Aufnahme, in die zweite Position, also die dichtende Rastposition, überführt werden. Aus der dichtenden Rastposition kann der Deckel zu einem späteren Zeitpunkt unter Zerstörung des elastischen Verbindungsanordnungselements demontiert werden, falls zu diesem späteren Zeitpunkt ein zusätzliches Bauteil an die Aufnahme angeschlossen werden soll.

In einer weiteren Weiterbildung der steckbaren Verbindungsanordnung ist das Bauteil dadurch gekennzeichnet, dass es in der dichtenden Rastposition zum pneumatischen Transport von Luft oder eines sonstigen Gases genutzt werden kann. In einer Variante dieser Weiterbildung ist die steckbare Verbindungsanordnung ein Teil eines Rohres, welches werkseitig in der als Halteposition ausgebildeten ersten Position angeordnet wird. Durch eine solche werkseitige Vormontage kann die Montage in einfacher Weise vom Nutzer durchgeführt werden, in dem das Rohr in das als Aufnahme ausgebildete zweite Teil gedrückt wird, so dass die steckbare Verbindungsanordnung manuell von der Halteposition in die dichtende Rastposition überführt wird.

Hinsichtlich des Verfahrens zur, insbesondere werkseitigen, Vorbereitung der steckbaren Verbindungsanordnung gemäß Anspruch 13 erfolgt in einer Weiterbildung das Anordnen des O-Rings in die Ringnut einer Aufnahme erst nach einem ersten formschlüssigen Einsetzen eines mit einer weiteren Ringnut ausgebildeten Ansatzes. Dabei wird der O-Ring von einer anderen Seite der Aufnahme eingeführt und erst danach wird die für einen Transport vorgesehene Position einer Halteposition zwischen dem Ansatz und der Aufnahme angenommen.

Diese und andere bevorzugte Weiterbildungen und Ausführungsformen der Erfindung sind Gegenstand der Unteransprüche und Zeichnungen und präzisieren sowohl die Verbindungsanordnungsanordnung als auch das Verfahren hinsichtlich besonders vorteilhafter Ausbildungen, vorzugsweise in Bezug auf einen elektrischen Motor zur Anbringung an einem Kompressor bei einer Druckluftversorgung, vorzugsweise für eine Druckluftversorgungsanlage für ein Fahrzeug. Wie im Rahmen des allgemeinen Aspekts der Erfindung erläutert ist das Konzept der Erfindung jedoch nicht beschränkt auf die Weiterbildung in Bezug auf einen elektrischen Motor zur Anbringung an einem Kompressor bei einer Druckluftversorgung.

Insbesondere solche Ausführungsformen der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Figuren der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Figuren und/oder den Ansprüchen offenbarten Merkmale. Die allgemeine Idee der Erfindung ist nicht beschränkt auf die exakte Form oder das Detail der im Folgenden dargestellten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Identische oder ähnliche Teile oder Teile identischer oder ähnlicher Funktion sind, dort wo sinnvoll, der Einfachheit halber mit einem gleichen Bezugszeichen versehen.

Weitere Vorteile, Merkmale und Einzelheiten der Erfindung ergeben sich aus der nachfolgenden Beschreibung der bevorzugten Ausführungsformen sowie anhand der folgenden Zeichnung. Im Einzelnen zeigt die Zeichnung in:
FIG. 1 eine Schnittdarstellung einer ersten Ausführungsform einer steckbaren Verbindungsanordnung in der zweiten Position (P2) gemäß einem allgemeinen Aspekt der Erfindung;
FIG. 2 eine Schnittdarstellung eines zweiten Teils in der ersten Ausführungsform der steckbaren Verbindungsanordnung gemäß FIG.1;
FIG. 3 eine Schnittdarstellung eines ersten Teils in der ersten Ausführungsform der steckbaren Verbindungsanordnung gemäß FIG.1;
FIG. 4 eine Detailansicht in einer Schnittdarstellung einer zweiten Ringnut in der ersten Ausführungsform der steckbaren Verbindungsanordnung an dem zweiten Teil gemäß FIG.2;
FIG. 5 eine Detailansicht in einer Schnittdarstellung einer ersten Ringnut in der ersten Ausführungsform der steckbaren Verbindungsanordnung an dem ersten Teil gemäß FIG.3 mit einem Detail X der ersten Ringnut;
FIG. 6 eine Schnittdarstellung einer ersten Abwandlung der ersten Ausführungsform der steckbaren Verbindungsanordnung in der zweiten Position P2 gemäß dem allgemeinen Aspekt der Erfindung;
FIG. 7 eine Schnittdarstellung der ersten Abwandlung der ersten Ausführungsform der steckbaren Verbindungsanordnung in einer vor einer werkseitigen Montage vorgesehenen dritten Position P0 gemäß dem allgemeinen Aspekt der Erfindung;
FIG. 8 eine Schnittdarstellung einer zweiten Abwandlung der ersten Ausführungsform der steckbaren Verbindungsanordnung in der vor einer werkseitigen Montage vorgesehenen dritten Position P0 gemäß dem allgemeinen Aspekt der Erfindung;

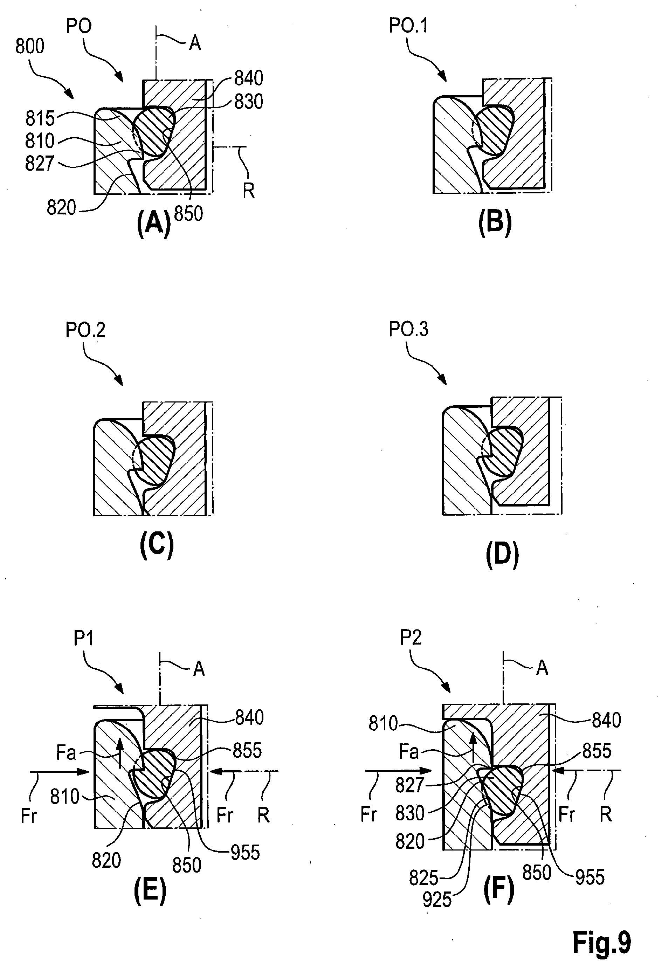

FIG. 9A - FIG. 9F eine schematische Darstellung eines Positionsverlaufs betreffend eine Abfolge von Positionen P0, P1, P3 des ersten und des zweiten Teils relativ zueinander mit einem Dicht- und Halteelement in Form eines O-Ringes in einer zweiten Ringnut des zweiten Teils bei der Überführung der steckbaren Verbindungsanordnung gemäß der zweiten Abwandlung der ersten Ausführungsform von einer vor einer werkseitigen Montage vorgesehenen dritten Position (P0), über Zwischenpositionen (P0.1, P0.2 und P0.3) und eine Halteposition der ersten Position (P1), in eine dichtende Rastposition der zweiten Position (P2);

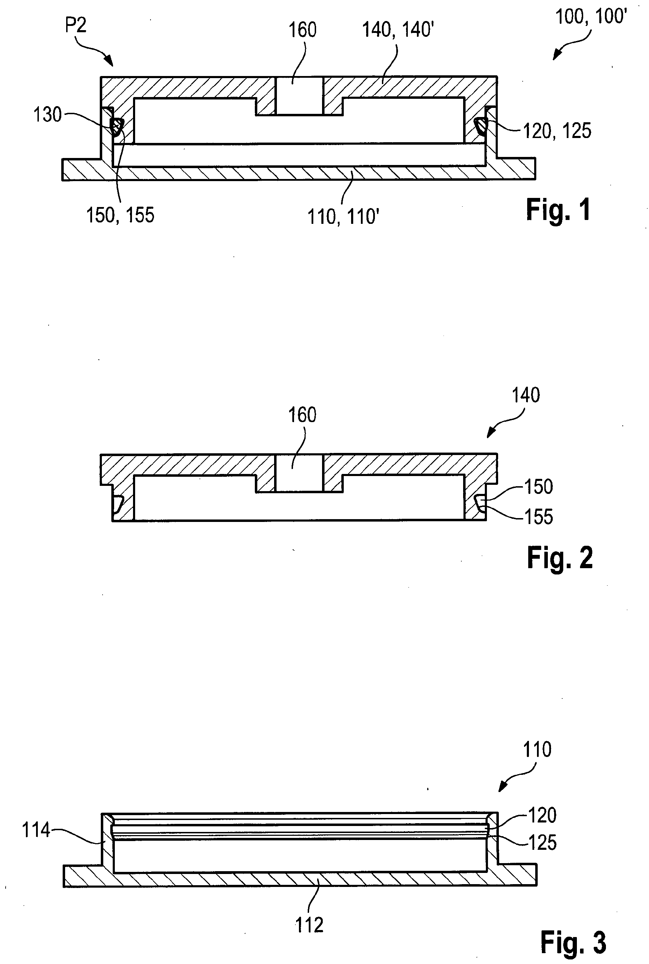

FIG. 1 zeigt eine erste Ausführungsform einer steckbaren Verbindungsanordnung 100 gemäß einem allgemeinen Aspekt der Erfindung in einer Schnittdarstellung in einer als dichtende Rastposition vorgesehenen zweiten Position P2. Die steckbare Verbindungsanordnung 100 in dieser ersten Ausführungsform weist ein erstes Teil 110 mit einer ersten Ringnut 120 auf, in welcher ein O-Ring 130 entsprechend einer ersten Nutkontur 125 angeordnet ist. Ein Verbindungsanordnungselement in Form eines Dicht- und Haltelements ist hier in Form des O-Ringes 130 realisiert. Weiterhin weist die steckbare Verbindungsanordnung 100 ein zweites Teil 140 auf, wobei der O-Ring 130 auch in einer zweiten Ringnut 150 des zweiten Teils 140 entsprechend einer zweiten Nutkontur 155 angeordnet ist, wodurch das Bauteil luftdicht abgedichtet ist unter Einrasten des ersten und zweiten Teils 110, 120. Die steckbare Verbindungsanordnung 100, mit der dargestellten relativen Position des ersten Teils 110, des O-Rings 130 und des zweiten Teils 140 zueinander, ist also in einer zweiten Position als eine dichtende Rastposition gezeigt.

Diese auch in FIG. 9F gezeigte Rastposition kann für einen Betrieb des Bauteils vorgesehen sein und, das erste und zweite Teil 110, 120 kann vorzugsweise manuell oder automatisiert oder teilautomatisiert in diese Rastposition überführt werden. Vorzugsweise wird das Bauteil 100 aus einer für einen Transport vorgesehenen Position, nämlich einer auch in FIG. 9E gezeigten Halteposition in die Rastposition überführt.

Das erste Teil 110 und das zweite Teil 140 sind in dieser Ausführungsform zylindrisch ausgebildet. Die erste und die zweite Nutkontur 125, 155 gewährleisten durch ihre Ausbildung und ihre dadurch vorliegende Kontaktfläche mit dem O-Ring 130, eine Dichtfunktion der steckbaren Verbindungsanordnung 100 in der vorliegenden dichtenden Rastposition. In dieser Ausführungsform ist der erste Teil 110 als ein Deckel gebildet, welcher eine mit dem zweiten Teil 140 verbunden Leitung 160 luftdicht verschließt.

In einer weitergebildeten Ausführungsform einer bevorzugten Anwendung ist das erste Teil 110 als Teil eines Motorgehäuses 110', beispielsweise als Mantelrohr, zum Anschluss an ein Kurbelgehäuse eines Kompressors vorgesehen. Gemäß einer besonders bevorzugten Weiterbildung ist das erste Teil 110 ein Motordeckel und/oder eine Welle. Zusätzlich oder alternativ ist gemäß einer besonders bevorzugten Weiterbildung das zweite Teil 140 ein weiterer Teil eines Motorgehäuses 140', insbesondere ein domförmiges Gehäuseteil, beispielsweise ein allgemein als CE-Bracket bezeichnetes und als solches bekanntes domförmiges Gehäuseteil . Eine solche steckbare Verbindungsanordnung entspricht strukturell der ersten Ausführungsform der steckbaren Verbindungsanordnung 100 eines Bauteils 100' gemäß der Darstellung aus FIG. 1.

Bevorzugt dient der elektrische Motor über sein Motorgehäuse (allgemein Aufnahme oder zweites Teil) und dem Deckel (allgemein Ansatz oder erstes Teil) zur Anbringung an einem Kurbelgehäuse eines Kompressors bei einer Druckluftversorgung. Die Druckluftversorgung wird insofern durch den Motor und den Kompressor gebildet und dient im Rahmen einer besonders bevorzugten Ausführungsform zum Anschluss an eine Druckluftversorgungsanlage für ein Fahrzeug.

FIG. 2 zeigt nun separat das zweite Teil 140 gemäß der ersten Ausführungsform der steckbaren Verbindungsanordnung 100 in einer Schnittdarstellung. Der zweite Teil 140 weist, wie bereits in FIG. 1 dargestellt, die zweite Ringnut 150 und die Leitung 160 auf. Die zweite Ringnut 150 bildet eine zweite Nutkontur 155 aus, welche in Kombination mit einem in der zweiten Ringnut 150 angeordneten O-Ring maßgeblich eine Haltefestigkeit des zweiten Teils 140 an dem ersten Teil 110 bei Vorliegen einer Halteposition gewährleistet.

FIG. 3 zeigt nun separat das erste Teil 110 gemäß der ersten Ausführungsform der steckbaren Verbindungsanordnung 100 in einer Schnittdarstellung. Das erste Teil 110 besteht aus einem Deckelboden 112 und einem Deckelkragen 114. Der Deckelkragen 114 weist, wie bereits in FIG. 1 dargestellt, die erste Ringnut 120 auf. Die erste Ringnut 120 bildet dabei eine erste Nutkontur 125 aus, welche maßgeblich eine Haltefestigkeit des zweiten Teils 140 in dem ersten Teil 110 bei Vorliegen einer Halteposition gewährleistet.

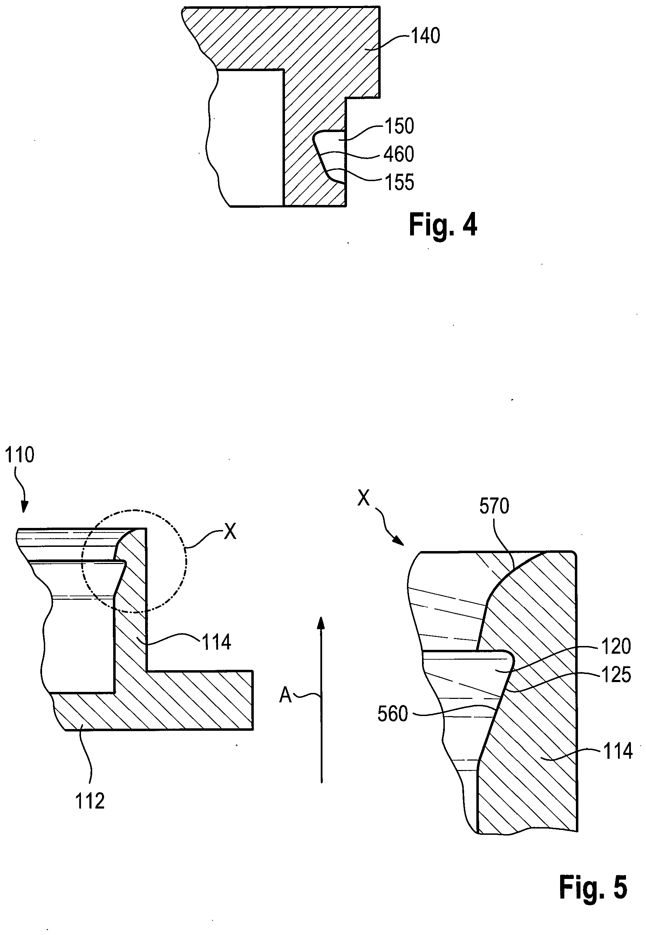

FIG. 4 zeigt eine Detailansicht der zweiten Ringnut 150 des zweiten Teils 140 in der ersten Ausführungsform der steckbaren Verbindungsanordnung 100 in einer Schnittdarstellung. Die bereits in FIG. 1 und FIG. 2 dargestellte zweite Ringnut 150 und die zweite Nutkontur 155 sind in dieser Figur detailliert dargestellt. Erkennbar ist dabei unter anderem eine Asymmetrie der Nutkontur 155 aufgrund eines abgeschrägten Nutgrundes 460.

FIG. 5 zeigt eine Detailansicht der ersten Ringnut 120 des ersten Teils 110 in der ersten Ausführungsform der steckbaren Verbindungsanordnung 100 in einer Schnittdarstellung. In FIG. 1 und FIG. 3 wurden Der Deckelboden 112 und der Deckelkragen 114 des ersten Teils 110 mit der ersten Ringnut 120 und der ersten Nutkontur 125 bereits dargestellt und FIG. 5 zeigt eine detaillierte Ansicht dieser Merkmale des ersten Teils 110, wobei das Detail X in einer vergrößerten Schnittdarstellung gezeigt ist.

Aus FIG. 5 wird deutlich, dass die erste Nutkontur 125 ebenfalls asymmetrisch ist, da sie ebenfalls einen abgeschrägten Nutgrund 560 aufweist. Außerdem ist eine Einführschräge 570 an dem Deckelkragen 114 zu erkennen. Dadurch wird die Montage der steckbaren Verbindungsanordnung 100 vereinfacht. Außerdem wird das manuelle Überführen der ersten Position P1 (der Halteposition) in die in FIG. 1 dargestellte zweite Position (dichtende Rastposition), durch das Verschieben des ersten Teils 110 relativ zum zweiten Teil 140 in axialer Richtung A erleichtert.

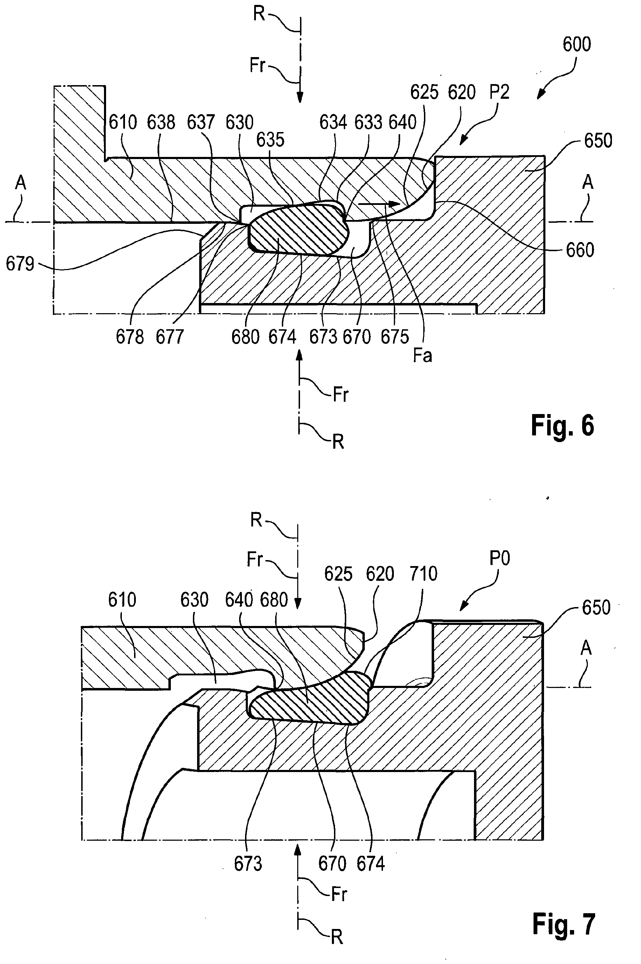

FIG. 6 zeigt eine Schnittdarstellung einer ersten Abwandlung der ersten Ausführungsform der steckbaren Verbindungsanordnung 600 in der zweiten Position P2 als vorzugsweise für den Betrieb vorgesehene Rastposition. Das erste Teil 610 weist eine Nase 620 mit einer Einführschräge 625 auf, wobei eine erste Ringnut 630 so ausgebildet ist, dass sie durch einen hakenartigen Grat 640 von der Nase 620 getrennt ist. Ausgehend von dem hakenartigen Grat 640 weist die erste Nutkontur 633 der ersten Ringnut 630 einen abgeschrägten, zur Nase hin abschüssig verlaufenden ersten Nutgrund 634 auf, welcher zusätzlich eine Erhabenheit 635 aufweist. Über einen zweiten Grat 637 sind die erste Ringnut und ein Rand 638 des ersten Teils voneinander getrennt.

Der zweite Teil 650 weist eine Anlage 660 auf, welche eine axiale Bewegung des ersten Teils zum zweiten Teil der steckbaren Verbindungsanordnung 600 in axialer Richtung A beschränkt, d.h. welche die steckbare Verbindungsanordnung 600 in axialer Richtung A beschränkt. Weiterhin weist das zweite Teil 650 eine zweite Ringnut 670 mit einer zweiten Nutkontur 673 auf, welche einen abgeschrägten zweiten Nutgrund 674 aufweist. Ein Nutvolumen einer durch die erste und zweite Ringnut 630, 670 gebildeten und von der ersten und zweiten Nutkontur 633, 673 begrenzten Vertiefung ist insgesamt geringer als ein Volumen des in der zweiten Position verformten elastischen Verbindungsanordnungselements 680. Insbesondere ragt ein Volumen des in der ersten Position P1 verformten elastischen Verbindungsanordnungselements 680 deutlich über ein Nutvolumen einer durch die zweite Ringnut 670 gebildeten und von der zweiten Nutkontur 673 begrenzten Vertiefung hinaus als ein Volumen des in der zweiten Position P2 verformten elastischen Verbindungsanordnungselements 680. Insbesondere ist ein Querschnitt des elastischen Verbindungsanordnungselements 680 in der zweiten Position P2 eher ellipsenförmig als in der ersten Position P1 - dies zeigt der Vergleich der Fig. 7/Fig. 8 bzw. FIG. 9A einerseits und der FIG. 6 bzw. FIG.9F andererseits. In der in FIG. 6 wie auch FIG. 9F gezeigten zweiten Position erfährt das erste Teil 610 durch eine elastische Verformung des elastischen Verbindungsanordnungselements 680 zwischen dem abgeschrägten ersten und dem abgeschrägten zweiten Nutgrund 633, 673 einen Haltedruck und damit eine Haltekraft Fr in radialer Richtung R, wobei sich ein Ringnutquerschnitt einer aus der ersten und zweiten Ringnut 630, 670 gebildeten Gesamtnut ausgehend von der Nase 620 verjüngt, wobei die Nutgründe ausgehend von der Nase 620 aufeinander zulaufen und die Nase und die Anlage in Kontakt zueinander stehen.

Die zweite Nutkontur 673 ist über eine erste Kante 675 von der Auflage 660 getrennt und durch eine zweite Kante 677 von einem weiteren Rand 678 des zweiten Teils 650, welcher eine weitere Einführschräge 679 aufweist.

Zwischen dem ersten Teil 610 und dem zweiten Teil 650 ist in deren Ringnuten 630, 670 ein O-Ring 680 angeordnet. Die Nase 620 und die Auflage 660, sowie der Rand 638 und der weitere Rand 678 stehen in Kontakt zueinander.

Der O-Ring wird zwischen dem abgeschrägten ersten Nutgrund 634 und dem abgeschrägten zweiten Nutgrund 674 und dem hakenartigen Grat 640 elastisch verformt, so dass in einer in FIG.6 nicht dargestellten zylindrischen Anordnung der steckbaren Verbindungsanordnung 600 ein Haltdruck und ein Lagedruck zwischen dem ersten und dem zweiten Teil 610, 650 existiert und damit entsprechend eine Haltekraft Fr in radialer Richtung R und eine Lagekraft Fa in axialer Richtung A. Eine elastische Verformung durch den hakenartigen Grat 640 entsteht durch eine axiale Länge der Nase 620 mit der Einführschräge 625. Die axiale Länge der Nase 620 führt dazu, dass der hakenartige Grat 640 über die erste Kante 675 in die zweite Ringnut 670 hineinragt.

Der Lagedruck und die Lagekraft Fa ist vorteilhaft für die steckbare Verbindungsanordnung 600 für den Fall, dass sie unter einem hohem Druck genutzt wird, so dass große Kräfte in eine Richtung wirken, die ohne den O-Ring 680 zu einer Trennung von dem ersten und zweiten Teil 610, 650 voneinander führen würden und somit zu einer Trennung der steckbaren Verbindungsanordnung 600.

Durch den Haltedruck und den Lagedruck, sind die beiden Teile 610, 650 zueinander fixiert, und können nur unter Zerstörung des O-Ringes 680 voneinander getrennt werden. Ein erkennbares Einrasten des hakenartigen Grates 640 hinter dem O-Ring 680 verdeutlicht ein Vorliegen einer, insbesondere für einen Betrieb des Bauteils vorgesehenen zweiten Position der beiden Teile 610, 650 zueinander, bei welcher es sich um eine dichtende Rastposition handelt. Die Nase 620 weist eine axiale Länge derart auf, dass in der zweiten Position das erste Teil 610 durch eine elastische Verformung des O-Ringes 680 zwischen dem abgeschrägten ersten und dem abgeschrägten zweiten Nutgrund 634, 674 und dem hakenartigen Grad 640 eine Haltekraft Fr in radialer Richtung R und eine Lagekraft Fa in axialer Richtung A erfährt, wobei die Lagekraft die Nase und die Anlage gegeneinander drückt.

FIG. 7 zeigt, wie bereits Fig. 6, eine Schnittdarstellung einer ersten Abwandlung der ersten Ausführungsform der steckbaren Verbindungsanordnung 600, anders als in Fig. 6 jedoch in einer vor einer werkseitigen Montage vorgesehenen dritten Position. Optional, bevor das Bauteil in der ersten Position ist, ergibt sich diese dritte Position P0 durch Anordnen eines Dicht- und Halteelements, insbesondere in Form eines O-Ringes 680, in nur der zweiten Ringnut 670 einer Gesamtnut in der dritten Position P0 einer vorläufigen Halteposition.

Das erste Teil 610 und das zweite Teil 650 sind wie bereits im Rahmen von FIG. 6 erläutert ausgebildet. Der O-Ring 680 ist nur in der zweiten Ringnut 670 angeordnet. Er wird in der dargestellten dritten Position durch die Einführschräge 625 des ersten Teils 610 und die zweite Nutkontur 673 mit dem abgeschrägten zweiten Nutgrund 674 elastisch verformt und sorgt somit in der dritten Position P0 für einen Haltedruck der eine axiale Fixierung der beiden Teile 610, 650 zueinander bewirkt aufgrund der in radialer Richtung R wirkenden Haltekraft Fr. Solch eine dritte Position P0 ist als vor einer werkseitigen Montage vorgesehene vorläufige Halteposition der beiden Teile 610, 650 zueinander anzusehen. Man erkennt weiterhin in FIG. 7, dass der O-Ring 680 einen durch die elastische Verformung entstandenen Querschnittsbereich in einer zur axialen Richtung A quer liegenden radialen Richtung R besitzt, dessen größere Ausdehnung von der Einführschräge 625 der Nase 620 begrenzt ist und dessen kleinere Ausdehnung 710 hinter den hakenartigen Grat 640 in die erste Ringnut 630 hineinragt.

In diesem Fall ist jedoch im Unterschied zu einer nachfolgend erläuterten zweiten Abwandlung der hakenartigen Grat 640 der Nase 620 am Ende der Einführschräge 625 vorgesehen, um in den O-Ring 680 nur in der zweiten Ringnut 670 einzugreifen. Es ergibt sich so neben einer bereits recht guten Dichtfunktion vor allem auch eine gute Haltefunktion wobei das erste und zweite Teil 610, 650 wohl nur unter Zerstörung des O-Rings 680 voneinander getrennt werden können.

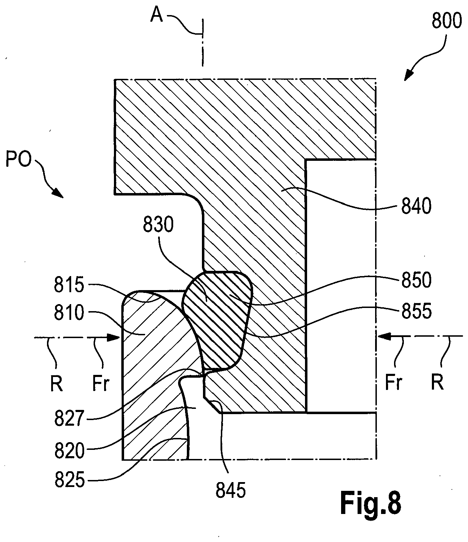

FIG. 8 zeigt eine Schnittdarstellung einer zweiten Abwandlung der ersten Ausführungsform der steckbaren Verbindungsanordnung 800 in der vor einer werkseitigen Montage vorgesehenen dritten Position P0. Optional, bevor das Bauteil in der ersten Position ist, ergibt sich diese dritte Position P0 durch Anordnen eines Dicht- und Halteelements, insbesondere in Form eines O-Ringes 830, in nur der zweiten Ringnut 850 einer Gesamtnut in der dritten Position P0 einer vorläufigen Halteposition.

Dargestellt ist ein erster Teil 810, welcher eine erste Ringnut 820 und eine erste Nutkontur 825 aufweist. Weiterhin zu erkennen ist ein zweiter Teil 840 mit der zweiten Ringnut 850 und der zweiten Nutkontur 855. In der zweiten Ringnut 850 ist ein Dicht- und Haltelement als elastisches Verbindungsanordnungselement in Form eines O-Rings 830 zwischen dem ersten Teil 810 und dem zweiten Teil 840 der steckbaren Verbindungsanordnung 800 angeordnet. Die dargestellte Position von erstem Teil 810, O-Ring 830 und zweitem Teil 840 relativ zueinander bilden eine dritte Position der steckbaren Verbindungsanordnung 800 zueinander, wie sie bereits im Rahmen von FIG.7 erläutert wurde. Ein durch eine elastische Verformung des O-Rings 830 erzeugter Pressdruck des O-Rings 830 gegen eine Einführschräge 815 des ersten Teils 810 sorgt dabei für einen Haltedruck der eine axiale Fixierung der beiden Teile 810, 840 zueinander bewirkt aufgrund der in radiale Richtung R wirkenden Haltekraft Fr, und damit für die in der dritten Position P0 vorliegende Haltefestigkeit. Die Einführschräge 815 ist durch einen hakenartigen Grat 827 von der ersten Ringnut 820 getrennt. Sowohl das erste Teil 810, als auch das zweite Teil 840 sind zylindrisch ausgebildet und weisen Einführschrägen 815, 845 auf, welche eine Montage der steckbaren Verbindungsanordnung 800 vereinfachen.

In diesem Fall ist jedoch im Unterschied zur ersten Abwandlung der hakenartigen Grat 827 vorgesehen, um etwa bündig mit einer Seitenwand der zweiten Nutkontur 855 abzuschließen. Es ergibt sich so eine nur mäßige Dichtfunktion vor allem nur begrenzt gute Haltefunktion aber das erste und das zweite Teil 810, 840 können noch ohne Zerstörung des O-Rings 830 voneinander getrennt werden.

FIG. 9 zeigt nun zum Verfahren gemäß dem Konzept der Erfindung eine schematische Darstellung eines Positionsverlaufs betreffend eine Abfolge von Positionen des ersten und des zweiten Teils relativ zueinander mit einem Dicht- und Halteelement in Form eines O-Ringes in einer zweiten Ringnut des zweiten Teils bei der Überführung der steckbaren Verbindungsanordnung 800 gemäß der in Fig. 8 dargestellten zweiten Abwandlung der ersten Ausführungsform von einer vor der werkseitigen Montage vorgesehenen dritten Position (P0), über Zwischenpositionen (P0.1, P0.2 und P0.3) und eine Halteposition der ersten Position (P1), in eine dichtende Rastposition der zweiten Position (P2); d.h. relative Positionen von erstem und zweitem Teil 810, 840 zueinander zwischen einer vor einer werkseitigen Montage vorgesehenen Position, einer als Halteposition ausgebildeten ersten Position und einer für einen Betrieb des Bauteils vorgesehenen zweiten Position einer dichtenden Rastposition; der Überführungsvorgang kann manuell, teilautomatisch (also manuell und automatisiert) oder automatisiert erfolgen. Die Positionen werden im Folgenden beschrieben.

FIG. 9A zeigt die vor einer werkseitigen Montage vorgesehene dritte Position, wie sie bereits im Rahmen von FIG. 7 und FIG. 8 dargestellt und erläutert wurde. Es ist deutlich erkennbar, dass der O-Ring 830 einen durch die elastische Verformung entstandenen Querschnittsbereich in einer zur axialen Richtung A quer liegenden radialen Richtung R besitzt, dessen kleinere Ausdehnung in Position P0 noch nicht in die erste Ringnut 820 hinter dem hakenförmigen Grat 827 hineinragt und dessen größere Ausdehnung von der Einführschräge 815 des ersten Teils 810 begrenzt ist.

Die Zwischenpositionen P0.1, P0.2 und P0.3 aus FIG. 9B bis FIG. 9D veranschaulichen eine Verschiebung des ersten Teils relativ zum zweiten Teil in Richtung A, wobei sich der O-Ring 830 entsprechend der Verschiebung, vorzugsweise manuell und/oder automatisiert, elastisch verformt. Hierbei ist zu erkennen, wie die Verschiebung auch zu einem Verschieben des Querschnittsbereichs größter Ausdehnung in der zur axialen Richtung A quer liegenden radialen Richtung R des O-Ringes 830 führt. Weiterhin ist zu erkennen, dass der durch elastische Verformung entstandene Querschnittsbereich des O-Rings 830 eine kleinere Ausdehnung in der ersten Ringnut 820 hinter dem hakenförmigen Grat 827 hat, und eine größere Ausdehnung des Querschnittsbereichs von der Einführschräge 815 des ersten Teils 810 begrenzt ist.

FIG. 9E zeigt eine insbesondere für den Transport vorgesehene erste Position, welche eine Halteposition der beiden Teile 810, 840 zueinander darstellt. Wie bereits im Rahmen von FIG. 6 erläutert, weist das erste Teil 810 eine Nase auf, wobei die erste Ringnut 820 so ausgebildet ist, dass sie durch einen hakenartigen Grat 827 von der Nase getrennt ist. So erfährt der O-Ring 830 eine durch elastische Verformung ausgebildete Haltkraft Fr in radialer Richtung R zwischen dem hakenartigen Grat 827 und einem abgeschrägten zweiten Nutgrund 955 der in der zweiten Ringnut 850 ausgebildeten zweiten Nutkontur 855. Diese elastische Verformung des O-Ringes 830 ist dabei so ausgebildet, dass der O-Ring 830 einen durch die elastische Verformung entstandenen Querschnittsbereich in axialer Richtung A besitzt, dessen größte Ausdehnung in der ersten Ringnut 820 ausgebildet ist. Dadurch erfahren die beiden Teile 810, 840 auch eine Lagekraft Fa in axialer Richtung A. Somit kann in der in FIG. 9E gezeigten Position, im Gegensatz zu den in den FIG. 9A bis FIG. 9D gezeigten Positionen, eine Trennung der beiden Teile 810, 840 nur noch unter Zerstörung des O-Ringes 830 erfolgen. In bevorzugten Ausführungsformen der Erfindung ist diese als erste Position bezeichnete Halteposition jedenfalls teilweise bereits dichtend.

Die Verschiebung der beiden Teile 810, 840 endet mit einem Einrasten des O-Ringes 830 in die zweite Ringnut 850, wie in FIG. 9F dargestellt in einer für einen Betrieb des Bauteils vorgesehenen Position als eine verlässlich dichtende Rastposition. Die dort dargestellte Position ist die verlässlich dichtende Rastposition, in welcher der O-Ring 830 sowohl in der ersten Ringnut 820, als auch in der zweiten Ringnut 850 angeordnet ist. Wie bereits im Rahmen von Fig. 6 erläutert, erfährt der erste Teil 810 durch den abgeschrägten ersten und zweiten Nutgrund 925, 955 und durch den hakenförmigen Grat 827, sowohl eine Haltekraft Fr in radialer Richtung R als auch eine Lagekraft Fa in axialer Richtung A, durch die elastische Verformung des O-Rings 830.

Weiterhin veranschaulicht FIG. 9 die vorliegenden Funktionen der ersten Nutkontur 825 und der zweiten Nutkontur 855 gemäß dieser zweiten Abwandlung der ersten Ausführungsform der steckbaren Verbindungsanordnung 800. Die zweite Nutkontur 855 des zweiten Teils 840 ist ausgebildet, den O-Ring 830 zu halten und sowohl für ein Drücken des ersten Teils 810 aus der Halteposition der FIG. 9E als auch für ein Ziehen des ersten Teils 810 aus der dichtenden Rastposition der FIG. 9F einen Widerstand zu bilden. Die erste Nutkontur 825 ist ausgebildet, sowohl das Einrasten in die dichtende Rastposition als auch den Widerstand für ein Ziehen des ersten Teils 810 aus der dichtenden Rastposition zu unterstützen. Die geometrische Gestaltung der ersten Nutkontur 825 und der zweiten Nutkontur 855 ist entsprechend dieser Funktion ausgeführt; nämlich derart, dass ein Rand des ersten Teils 810 relativ zu einem Rand des zweiten Teils 840 grundsätzlich in etwa eine einhakende Form hat.

Hierbei verfügt der O-Ring 830 durch die erste Nutkontur 825 und die zweite Nutkontur 855 über ausreichend Freiraum, um das manuelle Verschieben des ersten Teils 810 relativ zum zweiten Teil 840 zu erlauben, aber dennoch eine Pressung seiner elastischen Struktur zu erfahren.

In allen in der Zeichnung dargestellten Ausführungsformen sind das erste und das zweite Teil jeweils aus einem starren Material gebildet. In einer nicht dargestellten Ausführungsform sind die erste und die zweite Ringnut aus einem elastischen Material gebildet. Dadurch wird eine größere Kontaktfläche zwischen dem O-Ring und dem ersten Teil und zwischen dem O-Ring und dem zweiten Teil erreicht, als sie im Falle starrer Ringnuten vorliegen. Dies kann bei einem Vorliegen der dichtenden Rastposition eine sichere Bereitstellung der Dichtefunktion des O-Ringes unterstützen.

### Bezugszeichenliste (Bestandteil der Beschreibung)

- 100, 100': steckbare Verbindungsanordnung, Bauteil
- 110, 110': erstes Teil, Teil eines Motorgehäuses (Mantelrohr)
- 112: Deckelboden
- 114: Deckelkragen
- 120: erste Ringnut
- 125: erste Nutkontur
- 130: O-Ring
- 140, 140': zweites Teil, weiterer Teil eines Motorgehäuses
- 150: zweite Ringnut
- 155: zweite Nutkontur
- 160: Leitung
- 460: abgeschrägter Nutgrund der zweiten Nutkontur
- 560: abgeschrägter Nutgrund der ersten Nutkontur
- 570: Einführschräge
- 600: steckbare Verbindungsanordnung der ersten Abwandlung
- 610: erstes Teil der ersten Abwandlung
- 620: Nase
- 625: Einführschräge des ersten Teils der ersten Abwandlung
- 630: erste Ringnut der ersten Abwandlung
- 633: erste Nutkontur der ersten Abwandlung
- 634: erster Nutgrund
- 635: Erhabenheit
- 637: zweiter Grat
- 638: Rand
- 640: hakenartiger Grat
- 650: zweites Teil der ersten Abwandlung
- 660: Auflage
- 670: zweite Ringnut der ersten Abwandlung
- 673: zweite Nutkontur der ersten Abwandlung
- 674: zweiter Nutgrund
- 675: erste Kante
- 677: zweite Kante
- 678: weiterer Rand
- 679: weitere Einführschräge des zweiten Teils
- 680: O-Ring der ersten Abwandlung
- 710: größere Ausdehnung
- 800: steckbare Verbindungsanordnung der zweiten Abwandlung
- 810: erstes Teil der zweiten Abwandlung
- 815: Einführschräge des ersten Teils der zweiten Abwandlung
- 820: erste Ringnut der zweiten Abwandlung
- 825: erste Nutkontur der zweiten Abwandlung
- 827: hakenartiger Grat der zweiten Abwandlung
- 830: O-Ring der zweiten Abwandlung
- 840: zweites Teil der zweiten Abwandlung
- 845: Einführschräge des zweiten Teils der zweiten Abwandlung
- 850: zweite Ringnut der zweiten Abwandlung
- 855: zweite Nutkontur der zweiten Abwandlung
- 925: erster Nutgrund der zweiten Abwandlung
- 955: zweiter Nutgrund der zweiten Abwandlung
- A: axiale Richtung
- R: radiale Richtung
- P0: dritte Position
- P0.1, P0.2, P0.3: Zwischenpositionen
- P1: erste Position, Halteposition
- P2: zweite Position, Rastposition
- Fr: Haltekraft
- Fa: Lagekraft

## Patentansprüche

1. Steckbare Verbindungsanordnung (100) für ein Bauteil, aufweisend ein erstes Teil (110) und ein zweites Teil (140), mit einer ersten Nutkontur (125) in einer in dem ersten Teil (110) angeordneten ersten Ringnut (120) und mit einer zweiten Nutkontur (155) in einer in dem zweiten Teil (140) angeordneten zweiten Ringnut (150), und welche,
- über ein zwischen dem ersten Teil (110) und dem zweiten Teil (140) angeordnetes elastisches Verbindungsanordnungselement (130) in der zweiten Ringnut (150),
- in einer ersten Position (P1) durch eine elastische Verformung des elastischen Verbindungsanordnungselements (130) eine Halteposition zueinander besitzen können,und
- die entlang einer axialen Richtung (A) in eine, insbesondere für einen Betrieb vorgesehene, zweite Position (P2) überführbar sind, wobei die zweite Position eine durch eine elastische Verformung des elastischen Verbindungsanordnungselements (130) dichtende Rastposition ist, wobei das erste Teil (110) an einem ersten Rand eine Nase (620) mit einer Einführschräge (625) und einen hakenartigen Grat (640) aufweist, wobei die erste Ringnut (120) so ausgebildet ist, dass sie durch den hakenartigen Grat (640) von der Nase (620) getrennt ist, wobei
- das erste Teil (110) an der ersten Ringnut (120) die erste Nutkontur (125) mit einem abgeschrägten ersten Nutgrund (560) aufweist, und
- das zweite Teil (140) an der zweiten Ringnut (150) die zweite Nutkontur (155) mit einem abgeschrägten zweiten Nutgrund (460) aufweist und wobei
- in der ersten Position (P1) das erste Teil (110) durch eine elastische Verformung des elastischen Verbindungsanordnungselements (130) zwischen dem hakenartigen Grat (640) und/oder der Einführschräge (625) einerseits und dem abgeschrägten zweiten Nutgrund (460) des zweiten Teils (140) andererseits wenigstens eine Haltekraft (Fr) erfährt.

2. Steckbare Verbindungsanordnung (100) nach Anspruch 1, **dadurch gekennzeichnet, dass** das elastische Verbindungsanordnungselement (130) in Form eines Dicht- und Haltelements und/oder als ein O-Ring gebildet ist.

3. Steckbare Verbindungsanordnung (100) nach Anspruch 1 oder 2, **dadurch gekennzeichnet, dass** das erste Teil (110) und das zweite Teil (140) jeweils zylindrisch ausgebildet sind und/oder einen zylindrischen Rand (638, 678) aufweisen.

4. Steckbare Verbindungsanordnung (100) nach einem der Ansprüche 1 bis 3, **dadurch gekennzeichnet, dass** ein Volumen des in der ersten Position (P1) verformten elastischen Verbindungsanordnungselements (130) deutlicher über ein Nutvolumen einer durch die zweite Ringnut (150) gebildeten und von der zweiten Nutkontur (155) begrenzten Vertiefung hinausragt als ein Volumen des in der zweiten Position (P2) verformten elastischen Verbindungsanordnungselements (130), insbesondere ein Querschnitt des elastischen Verbindungsanordnungselements (130) in der zweiten Position (P2) eher ellipsenförmig ist als in der ersten Position (P1).

5. Steckbare Verbindungsanordnung (100) nach einem der Ansprüche 1 bis 4, **dadurch gekennzeichnet, dass**
das elastische Verbindungsanordnungselement (130) einen durch die elastische Verformung in der ersten Position (P1) entstandenen Querschnittsbereich in einer zur axialen Richtung (A) quer liegenden radialen Richtung (R) besitzt, dessen kleinere Ausdehnung von der Einführschräge (625) der Nase (620) begrenzt ist und dessen größere Ausdehnung hinter den hakenartigen Grat (640) in die erste Ringnut (630) hineinragt.

6. Steckbare Verbindungsanordnung (100) nach einem der Ansprüche 1 bis 5, **dadurch gekennzeichnet, dass**
- das erste Teil (110) die Nase (620) und einen abgeschrägten zur Nase (620) hin abschüssig verlaufenden ersten Nutgrund (634) aufweist, und/oder
- das zweite Teil (140) eine Anlage (660) aufweist, welche eine axiale Bewegung des ersten Teils (110) zum zweiten Teil (140) der steckbaren Verbindungsanordnung (100) in axialer Richtung (A) beschränkt.

7. Steckbare Verbindungsanordnung (100) nach Anspruch 6, **dadurch gekennzeichnet, dass** in der zweiten Position (P2) das erste Teil (110) durch eine elastische Verformung des elastischen Verbindungsanordnungselements (130) zwischen dem abgeschrägten ersten und dem abgeschrägten zweiten Nutgrund (634, 674) wenigstens eine Haltekraft (Fr) in radialer Richtung (R) erfährt, wobei sich ein Ringnutquerschnitt einer aus der ersten und zweiten Ringnut (120, 150) gebildeten Gesamtnut ausgehend von der Nase (620) verjüngt, wobei die Nutgründe (634, 674) ausgehend von der Nase (620) aufeinander zulaufen und die Nase (620) und die Anlage (660) in Kontakt zueinander stehen.

8. Steckbare Verbindungsanordnung (100) nach einem der Ansprüchen 1 bis 7, **dadurch gekennzeichnet, dass** die Nase (620) eine axiale Länge derart aufweist, dass in der zweiten Position (P2) das erste Teil (110) durch eine elastische Verformung des elastischen Verbindungsanordnungselements (130) zwischen dem abgeschrägten ersten und dem abgeschrägten zweiten Nutgrund (634, 674) und dem hakenartigen Grad (640) wenigstens eine Haltekraft (Fr) in radialer Richtung (R) und eine Lagekraft (Fa) in axialer Richtung (A) erfährt, wobei ein Haltedruck vor allem das erste und zweite Teil gegeneinander drückt und/oderein Lagedruck die Nase (620) und die Anlage (660) gegeneinander drückt.

9. Steckbare Verbindungsanordnung (100) nach einem der Ansprüchen 1 bis 8, **dadurch gekennzeichnet, dass** in einer dritten Position (P0), insbesondere vor einer werkseitigen Montage vorgesehenen dritten Position (P0), das erste und das zweite Teil (110, 140) eine vorläufige Halteposition zueinander aufweisen, bei welcher das erste Teil (110) durch eine elastische Verformung des elastischen Verbindungsanordnungselements (130) zwischen der ersten Einführschräge (625) und dem abgeschrägten zweiten Nutgrund (674) vor allem eine Haltekraft erfährt, insbesondere die Verformung frei ist von einer Einwirkung des hakenartigen Grates (640).

10. Steckbare Verbindungsanordnung (100) nach einem der Ansprüche 1 bis 9, **dadurch gekennzeichnet, dass** das erste Teil (110) ein Teil eines Deckels ist, welcher in der durch die zweite Position (P2) vorliegenden dichtenden Rastposition das zweite Teil (140) luftdicht verschließt.

11. Steckbare Verbindungsanordnung (100) nach einem der Ansprüche 1 bis 10, **dadurch gekennzeichnet, dass** das Bauteil in der durch die zweite Position (P2) vorliegenden dichtenden Rastposition zum Transport eines Gases, insbesondere Druckluft, genutzt werden kann.

12. Bauteil (100') mit einem Gehäuse, insbesondere mit einem Motorgehäuse und einem Kurbelgehäuse eines Kompressors, aufweisend eine steckbare Verbindungsanordnung (100) nach einem der Ansprüche 1 bis 11, bei welcher das erste Teil (110) als ein Motordeckel und/oder eine Welle (110'), insbesondere ein als Welle wirkender Motordeckel, und das zweite Teil (140) als ein Motorgehäuse, insbesondere eine Bohrung (140') im Motorgehäuse, ausgebildet sind.

13. Verfahren zur, insbesondere werkseitigen, Vorbereitung einer steckbaren Verbindungsanordnung (100) nach einem der Ansprüche 1 bis 12, aufweisend die Schritte:
- formschlüssiges Aufsetzen einer mit einer ersten Ringnut (120) ausgebildeten Aufnahme eines ersten Teils (110) auf den Ansatz eines zweiten Teils (140) in eine erste Position (P1) einer Halteposition, oder
formschlüssiges Ansetzen eines mit einer zweiten Ringnut (150) ausgebildeten Ansatzes des zweiten Teils (140) in eine Aufnahme des ersten Teils (110) in die erste Position (P1) einer Halteposition,
- axiales Bewegen des ersten Teils (110) und des zweiten Teils (140) zueinander entlang einer axialen Richtung (A) zum Überführen der steckbaren Verbindungsanordnung (100) in die zweite Position (P2) einer dichtenden Rastposition,
- und optional bevor die steckbare Verbindungsanordnung (100) in der ersten Position (P1) ist:
- Anordnen eines Dicht- und Halteelements, insbesondere in Form eines O-Ringes (130), in nur der zweiten Ringnut (150) einer Gesamtnut in einer dritten Position (P0) einer vorläufigen Halteposition.

## Claims

1. Plug-in connection arrangement (100) for a component, having a first portion (110) and a second portion (140), with a first groove contour (125) in a first annular groove (120) arranged in the first portion (110), and with a second groove contour (155) in a second annular groove (150) arranged in the second portion (140), and which,
- via a resilient connection arrangement element (130) which is arranged between the first portion (110) and the second portion (140) in the second annular groove (150),
- can have a retention position relative to each other, as a result of a resilient deformation of the resilient connection arrangement element (130), in a first position (P1), and
- which can be moved in an axial direction (A) into a second position (P2) which is provided in particular for operation, wherein the second position is a sealing engagement position as a result of a resilient deformation of the resilient connection arrangement element (130),
wherein the first portion (110) has, at a first edge, a lug (620) with an introduction chamfer (625) and a hook-like burr (640), wherein the first annular groove (120) is constructed in such a manner that it is separated from the lug (620) by the hook-like burr (640), wherein
- the first portion (110) has, at the first annular groove (120), the first groove contour (125) with a chamfered first groove base (560), and
- the second portion (140) has, at the second annular groove (150), the second groove contour (155) with a chamfered second groove base (460), and wherein,
- in the first position (P1), the first portion (110) is subjected, as a result of a resilient deformation of the resilient connection arrangement element (130) between the hook-like burr (640) and/or the introduction chamfer (625), on the one hand, and the chamfered second groove base (460) of the second portion (140), on the other hand, to at least one retention force (Fr).

2. Plug-in connection arrangement (100) according to Claim 1, **characterized in that** the resilient connection arrangement element (130) is constructed in the form of a sealing and retention element and/or as an O-ring.

3. Plug-in connection arrangement (100) according to Claim 1 or 2, **characterized in that** the first portion (110) and the second portion (140) are each constructed in a cylindrical manner and/or have a cylindrical edge (638, 678).

4. Plug-in connection arrangement (100) according to any of Claims 1 to 3, **characterized in that** a volume of the resilient connection arrangement element (130) which is deformed in the first position (P1) projects more substantially beyond a groove volume of a recess which is formed by the second annular groove (150) and which is delimited by the second groove contour (155) than a volume of the resilient connection arrangement element (130) which is deformed in the second position (P2), in particular a cross section of the resilient connection arrangement element (130) is more elliptical in the second position (P2) than in the first position (P1).

5. Plug-in connection arrangement (100) according to any of Claims 1 to 4, **characterized in that**
the resilient connection arrangement element (130) has a cross-sectional region, which is produced by the resilient deformation in the first position (P1), in a radial direction (R) which is transverse relative to the axial direction (A), the smaller extent of which cross-sectional region is limited by the introduction chamfer (625) of the lug (620) and the larger extent of which cross-sectional region projects into the first annular groove (630) behind the hook-like burr (640).

6. Plug-in connection arrangement (100) according to any of Claims 1 to 5, **characterized in that**
- the first portion (110) has the lug (620) and a chamfered first groove base (634) which extends in a sloping manner towards the lug (620) and/or
- the second portion (140) has an abutment (660) which limits an axial movement of the first portion (110) relative to the second portion (140) of the plug-in connection arrangement (100) in the axial direction (A).

7. Plug-in connection arrangement (100) according to Claim 6, **characterized in that**, in the second position (P2), the first portion (110) is subjected, as a result of a resilient deformation of the resilient connection arrangement element (130) between the chamfered first and the chamfered second groove bases (634, 674), to at least one retention force (Fr) in the radial direction (R), wherein an annular groove cross section of an overall groove which is formed from the first and second annular grooves (120, 150) tapers proceeding from the lug (620), wherein the groove bases (634, 674) taper towards each other proceeding from the lug (620), and the lug (620) and the abutment (660) are in contact with each other.

8. Plug-in connection arrangement (100) according to any of Claims 1 to 7, **characterized in that** the lug (620) has such an axial length that, in the second position (P2), the first portion (110) is subjected, as a result of a resilient deformation of the resilient connection arrangement element (130) between the chamfered first and the chamfered second groove bases (634, 674) and the hook-like burr (640), to at least one retention force (Fr) in the radial direction (R) and a positional force (Fa) in the axial direction (A), wherein a retention pressure in particular presses the first and second portions against each other and/or a positional pressure presses the lug (620) and the abutment (660) against each other.

9. Plug-in connection arrangement (100) according to any of Claims 1 to 8, **characterized in that**, in a third position (P0), in particular a third position (P0) provided before assembly at a factory, the first and second portions (110, 140) have a preliminary retention position relative to each other, in which the first portion (110) is subjected in particular to a retention force as a result of a resilient deformation of the resilient connection arrangement element (130) between the first introduction chamfer (625) and the chamfered second groove base (674), in particular the deformation is free from an action of the hook-like burr (640).

10. Plug-in connection arrangement (100) according to any of Claims 1 to 9, **characterized in that** the first portion (110) is a portion of a cover which closes the second portion (140) in an air-tight manner in the sealing engagement position which is present as a result of the second position (P2).

11. Plug-in connection arrangement (100) according to any of Claims 1 to 10, **characterized in that** the component may be used to transport a gas, in particular compressed air, in the sealing engagement position which is present as a result of the second position (P2).

12. Component (100') with a housing, in particular with a motor housing and a crankcase of a compressor, having a plug-in connection arrangement (100) according to any of Claims 1 to 11, in which the first portion (110) is constructed as a motor cover and/or a shaft (110'), in particular a motor cover which acts as a shaft, and the second portion (140) is constructed as a motor housing, in particular a hole (140') in the motor housing.

13. Method for preparing, in particular at a factory, a plug-in connection arrangement (100) according to any of Claims 1 to 12, having the steps:
- positively locking positioning of a receptacle of a first portion (110) onto the projection of a second portion (140) into a first position (P1) of a retention position, which receptacle is constructed so as to have a first annular groove (120), or
positively locking positioning of a projection of the second portion (140) into a receptacle of the first portion (110) into the first position (P1) of a retention position, which projection is constructed so as to have a second annular groove (150),
- axial movement of the first portion (110) and the second portion (140) relative to each other in an axial direction (A) in order to move the plug-in connection arrangement (100) into the second position (P2) of a sealing engagement position,
- and optionally before the plug-in connection arrangement (100) is in the first position (P1):
- arranging a sealing and retention element, in particular in the form of an O-ring (130), in only the second annular groove (150) of an overall groove in a third position (P0) of a preliminary retention position.

## Revendications

1. Agencement de connexion enfichable (100) pour un composant, présentant une première partie (110) et une deuxième partie (140), avec un premier contour de rainure (125) dans une première rainure annulaire (120) disposée dans la première partie (110), et avec un deuxième contour de rainure (155) dans une deuxième rainure annulaire (150) disposée dans la deuxième partie (140), et lesquelles,
- par le biais d'un élément d'agencement de connexion élastique (130) disposé entre la première partie (110) et la deuxième partie (140) dans la deuxième rainure annulaire (150),
- peuvent avoir une position de retenue l'une par rapport à l'autre dans une première position (P1) par déformation élastique de l'élément d'agencement de connexion élastique (130), et
- peuvent être transférées le long d'une direction axiale (A) dans une deuxième position (P2) prévue notamment pour un fonctionnement, la deuxième position étant une position d'encliquetage hermétique par déformation élastique de l'élément d'agencement de connexion élastique (130),
la première partie (110) présentant, au niveau du premier bord, un ergot (620) avec un biseau d'introduction (625) et une arête en forme de crochet (640), la première rainure annulaire (120) étant réalisée de telle sorte qu'elle soit séparée de l'ergot (620) par l'arête en forme de crochet (640),
- la première partie (110), au niveau de la première rainure annulaire (120), présentant le premier contour de rainure (125) avec un premier fond de rainure biseauté (560), et
- la deuxième partie (140), au niveau de la deuxième rainure annulaire (150), présentant le deuxième contour de rainure (155) avec un deuxième fond de rainure biseauté (460) et
- dans la première position (P1), la première partie (110), par déformation élastique de l'élément d'agencement de connexion élastique (130) entre l'arête en forme de crochet (640) et/ou le biseau d'introduction (625) d'une part, et le deuxième fond de rainure biseauté (460) de la deuxième partie (140) d'autre part, étant soumise à au moins une force de retenue (Fr) .

2. Agencement de connexion enfichable (100) selon la revendication 1, **caractérisé en ce que** l'élément d'agencement de connexion élastique (130) est formé sous la forme d'un élément d'étanchéité et/ou de retenue et/ou sous la forme d'un joint torique.

3. Agencement de connexion enfichable (100) selon la revendication 1 ou 2, **caractérisé en ce que** la première partie (110) et la deuxième partie (140) sont réalisées à chaque fois sous forme cylindrique et/ou présentent un bord cylindrique (638, 678).

4. Agencement de connexion enfichable (100) selon l'une quelconque des revendications 1 à 3, **caractérisé en ce qu'**un volume de l'élément d'agencement de connexion élastique (130) déformé dans la première position (P1) dépasse un volume de rainure d'un renfoncement formé par la deuxième rainure annulaire (150) et limité par le deuxième contour de rainure (155) nettement plus qu'un volume de l'élément d'agencement de connexion élastique (130) déformé dans la deuxième position (P2), en particulier une section transversale de l'élément d'agencement de connexion élastique (130) dans la deuxième position (P2) est plus en forme d'ellipse que dans la première position (P1) .

5. Agencement de connexion enfichable (100) selon l'une quelconque des revendications 1 à 4,
**caractérisé en ce que**
l'élément d'agencement de connexion élastique (130) présente une région en section transversale, produite par la déformation élastique de la première position (P1), dans une direction radiale (R) située transversalement par rapport à la direction axiale (A), dont la plus petite étendue est limitée par le biseau d'introduction (625) de l'ergot (620) et dont la plus grande étendue pénètre dans la première rainure annulaire (630) derrière l'arête en forme de crochet (640).

6. Agencement de connexion enfichable (100) selon l'une quelconque des revendications 1 à 5,
**caractérisé en ce que**
- la première partie (110) présente l'ergot (620) et un premier fond de rainure (634) biseauté s'étendant en pente vers l'ergot (620), et/ou
- la deuxième partie (140) présente une butée (660) qui limite un déplacement axial de la première partie (110) par rapport à la deuxième partie (140) de l'agencement de connexion enfichable (100) dans la direction axiale (A).

7. Agencement de connexion enfichable (100) selon la revendication 6, **caractérisé en ce que** dans la deuxième position (P2), la première partie (110), par déformation élastique de l'élément d'agencement de connexion élastique (130) entre le premier fond de rainure biseauté et le deuxième fond de rainure biseauté (634, 674), est soumise à au moins une force de retenue (Fr) dans la direction radiale (R), une section transversale de rainure annulaire d'une rainure complète formée à partir de la première et de la deuxième rainure annulaire (120, 150) se rétrécissant à partir de l'ergot (620), les fonds de rainure (634, 674) convergeant l'un vers l'autre à partir de l'ergot (620) et l'ergot (620) et la butée (660) étant en contact l'un avec l'autre.

8. Agencement de connexion enfichable (100) selon l'une quelconque des revendications 1 à 7, **caractérisé en ce que** l'ergot (620) présente une longueur axiale telle que, dans la deuxième position (P2), la première partie (110), par déformation élastique de l'élément d'agencement de connexion élastique (130) entre le premier fond de rainure biseauté et le deuxième fond de rainure biseauté (634, 674) et l'arête en forme de crochet (640), soit soumise à au moins une force de retenue (Fr) dans la direction radiale (R) et à une force de support (Fa) dans la direction axiale (A), une pression de retenue pressant avant tout la première et la deuxième partie l'une contre l'autre et/ou une pression de support pressant l'un contre l'autre l'ergot (620) et la butée (660) .

9. Agencement de connexion enfichable (100) selon l'une quelconque des revendications 1 à 8, **caractérisé en ce que** dans une troisième position (P0), en particulier une troisième position (P0) prévue avant un montage en atelier, la première et la deuxième partie (110, 140) présentent l'une par rapport à l'autre une position de retenue temporaire à laquelle la première partie (110), par déformation élastique de l'élément d'agencement de connexion élastique (130) entre le premier biseau d'introduction (625) et le deuxième fond de rainure biseauté (674), est soumise principalement à une force de retenue, en particulier la déformation n'étant pas affectée par une action de l'arête en forme de crochet (640) .

10. Agencement de connexion enfichable (100) selon l'une quelconque des revendications 1 à 9, **caractérisé en ce que** la première partie (110) fait partie d'un couvercle qui, dans la position d'encliquetage hermétique existant dans la deuxième position (P2), ferme de manière étanche à l'air la deuxième partie (140).

11. Agencement de connexion enfichable (100) selon l'une quelconque des revendications 1 à 10, **caractérisé en ce que** le composant, dans la position d'encliquetage hermétique existant dans la deuxième position (P2), peut être utilisé pour transporter un gaz, en particulier de l'air comprimé.

12. Composant (100') comprenant un carter, en particulier un carter de moteur et un carter de vilebrequin d'un compresseur, présentant un agencement de connexion enfichable (100) selon l'une quelconque des revendications 1 à 11, la première partie (110) étant réalisée sous la forme d'un couvercle de moteur et/ou d'un arbre (110'), en particulier d'un couvercle de moteur agissant en tant qu'arbre, et la deuxième partie (140) étant réalisée sous la forme d'un carter de moteur, en particulier d'un alésage (140') dans le carter de moteur.

13. Procédé de préparation, notamment en atelier, d'un agencement de connexion enfichable (100) selon l'une quelconque des revendications 1 à 12, présentant les étapes suivantes :
- positionnement par engagement par correspondance de formes, d'un logement d'une première partie (110) réalisé avec une première rainure annulaire (120) sur le début d'une deuxième partie (140) dans une première position (P1) d'une position de retenue, ou application par engagement par correspondance de formes d'un début de la deuxième partie (140) réalisé avec une deuxième rainure annulaire (150) dans un logement de la première partie (110) dans la première position (P1) d'une position de retenue,
- déplacement axial de la première partie (110) et de la deuxième partie (140) l'une par rapport à l'autre le long d'une direction axiale (A) pour transférer l'agencement de connexion enfichable (100) dans la deuxième position (P2) d'une position d'encliquetage hermétique,
- et facultativement, avant que l'agencement de connexion enfichable (100) soit dans la première position (P1) :
- disposition d'un élément d'étanchéité et de retenue, en particulier sous la forme d'un joint torique (130), seulement dans la deuxième rainure annulaire (150) d'une rainure complète dans une troisième position (P0) d'une position de retenue temporaire.
